# EUROPEAN PATENT SPECIFICATION

(11) **EP 2 878 436 B1**
(45) Date of publication and mention of the grant of the patent: **14.11.2018**
(21) Application number: 13820108.2
(22) Date of filing: 25.06.2013
(51) Int. Cl.: B29D 30/54

(54) **BASE TIRE MANUFACTURING METHOD**
BASISREIFENHERSTELLUNGSVERFAHREN
PROCÉDÉ DE FABRICATION DE PNEUMATIQUE DE BASE

(30) Priority: 19.07.2012 JP 2012160480
(43) Date of publication of application: 03.06.2015
(73) Proprietor: Bridgestone Corporation, Tokyo 104-8340 (JP)
(72) Inventor: KAWAGOE, Kenji, Tokyo 187-8531 (JP)
(74) Representative: Oxley, Robin John George
(86) International application number: PCT/JP2013/067307
(87) International publication number: WO 2014/013845

(56) References cited:
- JP-A- H05 154 941
- JP-A- S56 149 202
- JP-A- S61 233 528
- JP-A- 2006 062 518
- JP-A- 2006 151 327
- US-A- 5 810 953
- US-A1- 2006 207 701
- US-A1- 2007 084 533
- US-A1- 2010 132 862
- US-A1- 2011 220 255

## Description

### TECHNICAL FIELD

The present invention relates to a method for manufacturing a base tire that serves as a base for a tire and, more particularly, to a method for manufacturing a base tire to which a tread rubber is applied in a subsequent process and a base tire manufactured by this method.

### BACKGROUND ART

In one of the known methods for manufacturing a tire, a newly manufactured base tire to serve as the base for a tire and a tread rubber are cure-molded separately. Then a band-like or annular-shaped cure-molded tread rubber is applied to a bonding layer prepared on the outer periphery of the base tire, which is the application surface for the tread rubber. Then the base tire and the tread rubber are cured into an integrated product tire. The outer periphery of the base tire to which the tread rubber is bonded is formed into a smoothly curved surface in a cure-molding operation. Following this, however, the outer periphery is once buffed to form the application surface for the tread rubber into a predetermined shape, and then the tread rubber is applied to the application surface after providing a bonding layer for bonding the tread rubber to the application surface.

### Prior art documents

Patent Document 1: Japanese Unexamined Patent Application Publication No. 08-230072
Patent Document 2: Japanese Unexamined Patent Application Publication No. 2010-173139
Patent Document 3: Japanese Unexamined Patent Application Publication No. 2011-025853

Documents US 2010/0132862 - A, US 2006/0207701 - A and US 2007/0084533 - A individually discloses a tire comprising a belt layer, an outermost rubber layer of a predetermined width disposed over the belt layer for application of a tread thereto, edge rubber members located at both axial ends of the outermost rubber layer, wherein the loss tangent of the outermost rubber layer is lower than the loss tangent of the edge rubber members.

Document US 5810953 - A discloses a tire comprising a belt layer, an outermost rubber layer of a predetermined width disposed over the belt layer for application of a tread thereto, edge rubber members located at both axial ends of the outermost rubber layer, wherein : - the loss tangent of the outermost rubber layer is lower than the loss tangent of the edge rubber members; and - the thickness at the equator of the outermost rubber layer is comprised between: 1 mm and 5,25 mm.

### SUMMARY OF THE INVENTION

### PROBLEMS TO BE SOLVED BY THE INVENTION

The cure-molded base tire is subjected to a buffing of the outer periphery thereof to form the application surface into a predetermined shape. However, there must be a proper buffing allowance present in the pre-buffing peripheral rubber layer to secure a proper thickness left between the post-buffing application surface and the belt layer. Formerly, therefore, a buffing allowance was provided by making the rubber layer sufficiently thick in the radial direction of the tire from the outermost belt located in the radially outermost position in the belt layer. Then the shape and thickness of the post-buffing
application surface were adjusted. It is therefore the current status that no optimum conditions have yet been found for the buffing allowance. For example, if the rubber layer is made too thick, then it will be easier to adjust the shape and thickness of the application surface at the time of buffing, but it becomes impossible to realize optimal curing or reduceδδδδ material cost. On the other hand, if the rubber layer is made too thin, it will place limits on the shape of the application surface at the time of buffing. Also, it will be difficult to secure a proper thickness for the post-buffing rubber layer, and it will be impossible to obtain a predetermined shape for the application surface.

Thus, an object of the present invention is to provide a base tire having a proper thickness for the rubber layer by setting the thickness of the rubber layer in such a manner as to optimize the buffing allowance of the cure-molded base tire, without placing limits on the shape of the post-buffing application surface.

### MEANS FOR SOLVING THE PROBLEM

To solve the above-described problems, the present invention provides a method as defined in claim 1, for manufacturing a base tire which has a belt layer, an outermost rubber layer of a predetermined width disposed over the belt layer for application of a tread thereto, and edge rubber members located at both axial ends of the outermost rubber layer. In the manufacture, the loss tangent (tan δ) of the outermost rubber layer is set lower than the loss tangent (tan δ) of the edge rubber members, the pre-buffing thickness A1 at the equator of the outermost rubber layer is set at "post-buffing thickness A2 × 150%" or less, and the post-buffing thickness A2 is set in a range of 1 mm to 3.5 mm. Thus, the pre-buffing thickness A1 of the outermost rubber layer becomes thinner than the conventionally common thickness, such that the curing time in the process of cure-molding the base tire can be shortened. Also, the amount of buffing to form the tread application surface after the cure-molding of the base tire can be reduced, so that the time required for buffing can be shortened. Also, the amount of buffing thus reduced can decrease the amount of buffing dust occurring in the process of buffing, thereby cutting the waste of material.

The loss tangent (tan δ) is an indicator of rolling performance (rolling resistance). It is considered that the lower this value, the better the rolling performance is. However, a lower loss tangent (tan δ) may generally result in a lowered resistance to surface damage. In this regard, the present invention satisfies both the rolling performance and the resistance to surface damage by setting the loss tangent (tan δ) of the outermost rubber layer lower than the loss tangent (tan δ) of the edge rubber members which can come in contact with the road surface.

Preferred embodiments of the invention are defined in the dependent claims 2 to 4.

### BRIEF DESCRIPTION OF THE DRAWINGS

FIG. 1 is a cross-sectional view showing a structure of a base tire.
FIG. 2 is an enlarged cross-sectional view of a base tire.
FIG. 3 is a table showing the data comparing a conventional base tire with a base tire of the invention.
FIG. 4 is tables showing the results of verification of preferred settings of thicknesses before and after the buffing of the base tire of the invention.

Hereinafter, the invention will be described based on preferred embodiments which do not intend to limit the scope of the claims of the present invention but exemplify the invention. All of the features and the combinations thereof described in the embodiments are not necessarily essential to the means to solve problems propounded by this invention, and they also include constructions and arrangements to be employed selectively.

### BEST MODE FOR CARRYING OUT THE INVENTION

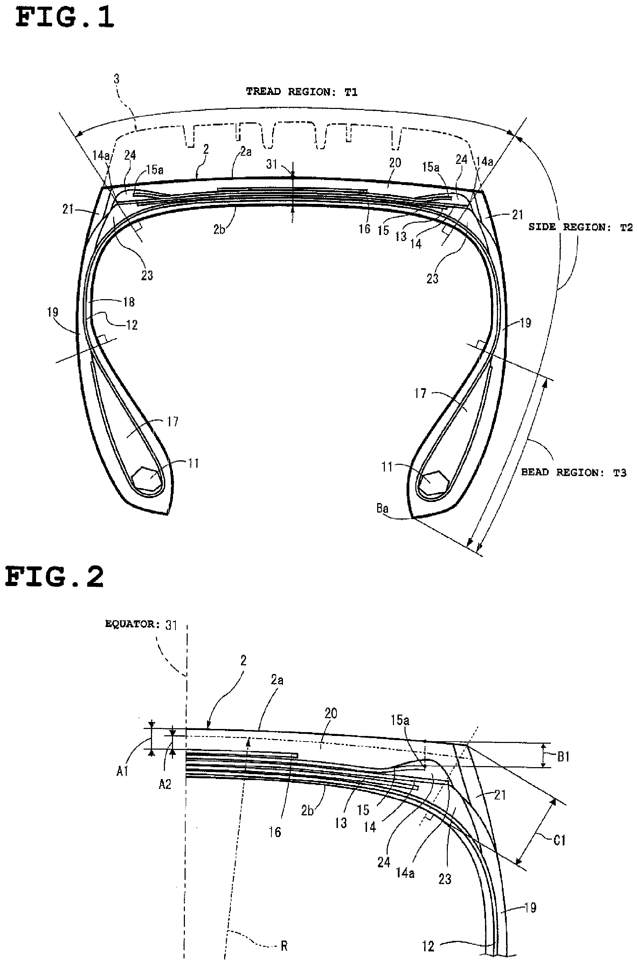

FIG. 1 shows an example of a cross-sectional view taken along the axial direction of a base tire 2 manufactured by a base tire manufacturing method of this invention, to which a tread rubber 3 is applied in a subsequent process. As shown in FIG. 1, the base tire 2 includes bead cores 11, which are each a bundle of steel cords called bead cords, a carcass 12, which has reinforcement cords consisting of steel cords oriented radially, and a belt layer comprised of a plurality of band-shaped belts 13 to 16 arranged obliquely or parallelly along the circumferential direction of the tire. The belts 13 to 16 are, for instance, formed with mutually differing widths, and the belt 14 is the widest. Over this belt layer, a base tread 20, which is the outermost rubber layer of a predetermined width for application of a tread thereto, is provided, and at both axial ends of the base tread 20, the edge rubber members to be discussed later are disposed.

Provided at each axial end of the belt layer is a cushion rubber layer which prevents the separation of the edge portion of the belt layer from the adjacent rubber members. The cushion rubber layers are each a member that ensures the unity of the belts with each other by filling the gaps between the belts and the adhesion of the belt layer with the other members at the edge thereof after cure-molding of the base tire 2. More specifically, each of the cushion rubber layers consists of an under-belt cushion rubber layer 23 located under the widest belt 14 in the belt layer and an inter-belt cushion rubber layer 24 located thereabove. The under-belt cushion rubber layer 23 is disposed between the belt 14 and the carcass 12 in such a way as to cover the edge portion 14a at the edge portion 14a of the belt 14 and is made of a rubber member whose loss tangent (tan δ) is lower than the loss tangent (tan δ) of the rubber material of the base tread 20.

As mentioned above, the under-belt cushion rubber layer 23, which is made of a rubber softer than that of the base tread 20, is provided between the belt 14 and the base tread 20 at each edge portion 14a of the widest belt 14 in the belt layer. As a result, even when a force capable of deforming the belt 14 has entered the base tire 2 through the tread in contact with the road surface during tire rotation, the cushion rubber layer is flexible enough to adjust to the deformation of the belt 14. In particular, this helps prevent the separation of the edge portion of the widest belt 14 from the rubber members adjacent to the under-belt cushion rubber layer 23 and the inter-belt cushion rubber layer 24 which wrap around a part of the belt 14, thereby making the base tire 2 highly durable.

The loss tangent (tan δ) is an indicator of rolling performance (rolling resistance). It is considered that the lower this value is, the better the rolling performance will be. However, as mentioned already, a lower loss tangent (tan δ) may generally result in a lowered resistance to surface damage. In this regard, the present invention satisfies both the rolling performance and the resistance to surface damage by setting the loss tangent (tan δ) of the outermost rubber layer lower than the loss tangent (tan δ) of the edge rubber members which can come in contact with the road surface or the like.

The under-belt cushion rubber layer 23, which fills the space between the carcass 12 located radially inside of the edge portion 14a of the widest belt 14 and the belt 14, is joined with the belt 13, the belt 14, the carcass 12, and the side rubber 19 and base tread 20 to be discussed later. Thus, the under-belt cushion rubber layer 23 can respond to the deformation of the tread rubber 3 on the base tire 2 when the tire is in use and thus can prevent the separation of the belt 14 from the base tread 20, the side rubber 19, and the carcass 12.

The inter-belt cushion rubber layer 24 is so disposed as to fill the interspace between the edge portion 14a of the belt 14 and the edge portion 15a of the belt 15 and wrap around the edge portion 14a of the belt 14 and the edge portion 15a of the belt 15 toward the radially outer side of the belt 15, thus protecting the edge portion 14a of the belt 14 and the edge portion 15a of the belt 15. A rubber member softer than the base tread 20 is used as the inter-belt cushion rubber layer 24. Note that the hardnesses of the rubber members are measured at 25°C (room temperature) by the measuring method specified in the JIS-A standard.

In other words, the inter-belt cushion rubber layer 24 adheres tightly to the radially outer surface of the belt 15 by wrapping around the edge portion 14a of the belt 14 and the edge portion 15a of the belt 15 located thereabove near the edge portion 14a of the widest belt 14 in the belt layer. Thus, the inter-belt cushion rubber layer 24, which is capable of responding to the deformation of the tread rubber 3 on the base tire 2 when the tire is in use, can prevent the separation of the belt 15 from the base tread 20 and the widest belt 14.

It is to be noted that the under-belt cushion rubber layer 23 and the inter-belt cushion rubber layer 24, which constitute the cushion rubber layer, may be made of rubber members of the same composition so long as the above-described conditions are met.

The cushion rubber layer comprised of the under-belt cushion rubber layer 23 and the inter-belt cushion rubber layer 24, together with the side rubber 19 and the mini side rubber 21 to be discussed layer, constitutes an edge reinforcement rubber layer for reinforcing the edge portion of the belt layer by being located at each axial end of the belt layer.

Also, the base tire 2 includes a bead filler 17 for reinforcing each bead core 11, an inner liner 18 for covering the inner periphery of the carcass 12, a side rubber 19 for covering the part of the carcass 12 corresponding to each side of the base tire, and a base tread 20 for covering the belt layer to which a tread rubber 3 is applied.

The base tread 20 is the outermost rubber layer made mainly of rubber, and the mini side rubber 21 is disposed at each axial end of the base tread 20. The mini side rubber 21 is an edge rubber member to cover and protect each axial end portion of the base tread 20 so as not to allow the axial end portion of the base tread 20 to be exposed on the surface of the base tire 2. The mini side rubber 21 covers the side of the base tread 20 by joining with the side rubber 19 along the radially upper end of the side rubber 19. The mini side rubber 21 is exposed on the outer periphery 2a and the side surface at the hump portion of the base tire 2. Note that the hump portion as used herein refers to the neighborhood of the border along which the tread region T1 and side region T2 of the base tire 2 are connected with each other.

Accordingly, the outer periphery 2a of the base tire 2 is comprised of the base tread 20 and the mini side rubbers 21. And a cured tread or an uncured tread is applied on top of the base tread 20 and the mini side rubbers 21 in a subsequent process.

It is to be noted that although the cross-sectional view of the base tire 2 shown in FIG. 1 represents an example of a structure of a truck/bus tire, the present invention is not limited to specific tire uses such as those for passenger vehicles, aircraft, and construction vehicles.

The above-described base tire 2 is formed as follows, as a green base tire prior to curing. Firstly, uncured inner liner rubber in a sheet to become the inner liner 18 is wrapped around the circumference of a cylindrical building drum and then uncured carcass member in a sheet to become the carcass 12 is wrapped around the periphery of the inner liner rubber.

Next, the bead cores 11 and the bead fillers 17, both formed in advance into rings, are fitted to the edge parts on the periphery of the carcass member from the respective ends of the building drum, and then the edge portions of the carcass member are each turned up after wrapping around the bead core 11 and the bead filler 17, thus forming the bead regions T3 of the base tire 2.

Next, side wall rubber in a band shape to become the side rubber 19 is laid in a winding manner on each of the positions of the carcass member corresponding to the right and left bead regions T3 and side regions T2 of the base tire 2. And the under-belt cushion rubber layer 23 is applied on the carcass member in each of the positions corresponding to the edge portions 14a, 14a of the widest belt 14 in the belt layer of the base tire 2.

Next, the above-described group of stacked members is formed into a toroidal shape with the axially middle portion thereof inflated by the operation of the bladder, which is an inflating means incorporated in the building drum. Then a belt layer is formed by stacking uncured belt members, each formed in a band shape, to become the belts 13 to 16 by wrapping them sequentially around the periphery of the most inflated middle potion of the carcass member. And the inter-belt cushion rubber layers 24 are each applied in such a manner as to straddle the edge portion 14a of the widest belt 14 and the edge portion 15a of the belt 15 in the belt layer.

Next, uncured base tread rubber in a band shape wider than the belt layer, which will become the base tread 20, is laid on the belt layer by wrapping therearound such that it overlaps with the end portions of the right and left side wall rubbers. After cure-molding, this base tread rubber becomes the base tread 20, which is the radially outermost rubber layer of the base tire 2. Now, along each of the axial edge portions of the base tread rubber, mini side gum to become the mini side rubber 21 is laid on the under-belt cushion rubber layer 23 and the inter-belt cushion rubber layer 24 in such a manner that the mini side gum is set on each of the edge portions of the base tread rubber and the side wall rubber. Thus formed is a green base tire.

This green base tire is placed in a not-shown cure-molding equipment and cure-molded in the mold to become a base tire 2. The molding surface of the mold for forming the outer periphery of the green base tire does not have a profile for forming the grooves of a tread pattern or the like, but is smoothly curved at a predetermined curvature. For example, the outer periphery 2a of the base tire 2 after cure-molding is formed with an axial cross section including an arc having a curvature radius of at least 500 mm to 2500 mm. The outer periphery 2a of the base tire 2 is, for instance, cure-molded into a curved shape consisting of an arc of a single curvature radius or a combination of a plurality of selected arcs of different sizes. The outer periphery 2a in an axial cross section is formed by the mold to include at least one arc having a curvature radius in the above-mentioned range, with the center of the arc set on the tire rotation central axis side on the equatorial plane of the base tire 2 and the arc extending in the axial direction of the base tire 2.

For example, when the outer periphery 2a is formed with an arc of a single curvature radius, the center of the arc is set on the equatorial plane of the base tire 2 and the single arc extends in the axial direction of the base tire 2.

Also, when the outer periphery 2a is formed with two arcs of different curvature radii from the range of 500 mm to 2500 mm, the middle part of the outer periphery 2a is formed with an arc of a larger curvature radius of the two selected arcs. Then the parts outside from the ends of the arc of the larger curvature radius are each formed with the arc of a smaller curvature radius. In this case, too, in the same way as when the outer periphery 2a is formed with an arc of a single curvature radius, the outer periphery 2a in an axial cross section is formed with the centers of the arc of the larger curvature radius and the arc of the smaller curvature radius set on the tire rotation central axis side on the equatorial plane of the base tire 2 and the arc of the larger curvature radius and the arcs of the smaller curvature radius extending in the axial direction of the base tire 2. It should be noted that the width of the arc of the larger curvature radius formed in the middle part of the outer periphery 2a should fall within a range of 50% to 70% of the tread width.

Also, when the outer periphery 2a is formed with a plurality of arcs of different curvature radii from the range of 500 mm to 2500 mm, the middle part of the outer periphery 2a may be formed with an arc of the largest curvature radius of the plurality of selected arcs within the range of 50% to 70% of the tread width. Then the outer parts from the ends of the largest arc may be each formed with the arcs of incrementally smaller curvature radii. In this case, too, the centers of the plurality of selected arcs are set on the tire rotation central axis side on the equatorial plane of the base tire 2.

In forming the outer periphery 2a, it is preferable that an arc of a curvature radius in excess of 900 mm is formed in the middle part of the axial cross section. Then the operational efficiency in the subsequent process of forming (buffing) the bonding layer or applying the tread to the base tire will be improved. Also, it will be possible to reduce the buffing amount (abrasion amount) in the buffing operation and form the application surface so as to ensure that the bonding area between the base tread 20 and the tread rubber 3 becomes larger.

The mini side rubbers 21, the side rubbers 19, and the base tread 20 are made of rubber materials of mutually differing compositions. For example, by using different materials for the side rubber 19 constituting the side region T2 and the base tread 20, it is possible to assign specialized performances to the respective regions of the base tire 2.

That is, hard rubber showing excellent resistance to cutting may be used for the mini side rubbers 21 and the side rubbers 19, whereas a softer rubber than that of the mini side rubbers 21 or the side rubbers 19, which shows high cure-adhesiveness, may be used for the base tread 20. This will provide adequate cushion in relation to the belt layer. More specifically, the base tread 20 should be constituted by a rubber member having such properties that the loss tangent (tan δ) thereof is lower than the loss tangent (tan δ) of the adjacent rubber members, namely, the mini side rubber 21, the side rubber 19, the under-belt cushion rubber layer 23, and the inter-belt cushion rubber layer 24.

Also, rubber material featuring high rigidity to improve steering performance or low rigidity to improve ride comfort may be used for the side rubbers 19 or the base tread 20 to suit the characteristics desired for the base tire 2 to be manufactured.

Also, the mini side rubber 21 and the side rubber 19 may be integrally structured together with a rubber material of the same composition.

In this invention, the tread region T1 refers to the region between the edge portions 14a, 14a of the widest belt 14. In concrete terms, the tread region T1 refers to the range between the normal lines extending from the inner periphery 2b of the base tire 2, passing through the edge portions 14a of the belt 14, and intersecting with the outer periphery 2a of the base tire 2.

Also, the side region T2 refers to the region between the edge portion 14a of the belt 14 and the edge portion Ba of the inner periphery of the tire. Also, the bead region T3 refers to the region between the radially upper end of the bead filler and the edge portion Ba of the inner periphery of the tire in the side region T2. That is, the bead region T3 falls within the side region T2. In cases where the bead filler 17 is not used in the base tire 2, the bead region T3 refers to the interval between the radially upper end of the bead core 11 and the edge portion Ba of the inner periphery of the tire. Also, in cases where the bead core 11 is not provided, the bead region T3 refers to the interval between the radially upper end of the bead corresponding to the bead core 11 and the edge portion Ba of the inner periphery of the tire.

Also, the thickness of the tire as used herein refers to a cross-sectional thickness of the base tire 2, which is the distance in an axial cross section between the points on a virtual line drawn perpendicular to the radially innermost surface where the line intersects with the radially innermost surface and the radially outermost surface of the tire which is fitted at atmospheric pressure on the rim matching the tire size.

Accordingly, the tread thickness in the tread region T1 refers to the thickness at the equator 31 which is the axial center position in the tread region T1. The side thickness in the side region T2 refers to that of the thinnest portion in the side region T2. And the bead thickness in the bead region T3 refers to that of the thickest portion in the bead region T3 at a position radially outward of the bead core 11. Without the bead core 11, however, the bead thickness in the bead region T3 refers to that of the thickest portion in the bead region T3. Also, the hump thickness C1 (see FIG. 2) refers to the distance between the point where the tread region T1 and the side region T2 are connected with each other and the inner surface of the tire.

In other words, the green base tire is of the same structure as a tire manufactured by an ordinary tire manufacturing method, with the exception that the green base tire does not have the tread rubber 3 in the tread region T1. The ordinary tire manufacturing method meant here is one in which a green base tire with an uncured tread rubber applied to the base tread 20 thereof is placed in a cure-molding equipment in which the entire tire with a tread pattern is cure-molded.

The green base tire is cured in a not-shown cure-molding equipment without the tread rubber applied thereto. Note that a method other than the above-described manufacturing method of the base tire 2 may be employed in which the base tire 2 of this invention is manufactured by cure-molding the member materials placed on a mold having a tire interior shape and covered by an outer mold.

The base tread 20 and the mini side rubbers 21 constituting the outer periphery 2a of the cure-molded base tire 2 are formed into a predetermined shape by a mold. That is, the cure-molded base tread 20 is formed with a buffing allowance of a predetermined thickness left, so that the application surface for the tread rubber 3 can be formed by buffing in a subsequent process. Accordingly, the base tread 20 is formed in such a manner that the thickness A1 (see FIG. 2) of the base tread 20 as the pre-buffing outermost rubber layer is thicker by the buffing allowance.

As shown in FIG. 2, the buffing allowance of the base tread 20 as the outermost rubber layer is so set that the pre-buffing thickness (thickness from the outermost belt 16 to the surface of the base tread 20) A1 at the equator (axial middle portion) 31 of the base tire 2 is 150% of the post-buffing thickness A2 or less. That is, the pre-buffing thickness A1 of the base tread 20 as the outermost rubber layer at the equator 31 of the base tire 2 is 150% or less of the post-buffing thickness A2. Also, the post-buffing thickness A2 at the equator 31 at this time is set within a range of 1 mm to 4 mm. Thus, with the post-buffing thickness A2 at the equator 31 set within the range of 1 mm to 4 mm, the pre-buffing thickness A1 from the belt 16 to the surface of the base tread 20 at the equator 31 is 6.0 mm or less.

Also, the lower limit of the pre-buffing thickness A1 at the equator 31 is set at 110% of the post-buffing thickness A2. Thus, in view of the allowable range of 1 mm to 4 mm for the post-buffing thickness A2 of the base tread 20, the lower limit of the pre-buffing thickness A1 at the equator 31 is set at 1.1 mm or more in correspondence to the post-buffing thickness A2 of 1 mm. In this way, a degree of freedom can be gained in the choice of buffing shape in the buffing operation. Therefore, by setting a lower limit for the pre-buffing thickness A1 at the equator 31 of the base tread 20, it is possible to prevent the loss of freedom in choosing the buffing shape as a result of setting the thickness A1 too thin. For example, if the pre-buffing thickness A1 is less than "post-buffing thickness A2 × 110%", then the curvature radius R for buffing cannot be selected from the predetermined range, thus making the surface shape nearly flat. Consequently, the bonding area between the base tire 2 and the tread cannot be made wide enough. In such a case, the outer periphery 2a after buffing cannot take a predetermined shape, which causes deviation from the ground contact shape capable of achieving optimum tire performance when the tread is applied in a subsequent process.

Hence, the range of the pre-buffing thickness A1 at the equator 31 that can be set is from 1.1 mm to 6.0 mm.

Also, it is preferable that the pre-buffing thickness B1 from the outer periphery 2a to each of the edge portions 15a, 15a of the belt 15, which is near the hump portion and the nearest to the outer periphery 2a of the plurality of belts 13 to 16, is set at "pre-buffing thickness A1 of the base tread 20 at the equator 31 ± 3 mm".

For example, when the pre-buffing thickness A1 of the base tread 20 at the equator 31 is set the thickest, the thickness B1 at the edge portion 15a may be set at "A1 - 3 mm". On the other hand, when the pre-buffing thickness A1 of the base tread 20 at the equator 31 is set the thinnest, the thickness B1 at the edge portion 15a may be set at "A1 + 3 mm". More specifically, the pre-buffing thickness A1 of the base tread 20 at the equator 31 is set in a range of 1.1 mm to 6.0 mm. Therefore, when the thickness A1 at the equator 31 is 6.0 mm, the thickness B1 at the edge portion 15a is set at "6.0 mm - 3.0 mm = 3.0 mm". In this way, it is possible to reduce the amount of buffing dust that occurs in the buffing operation. Also, when the thickness A1 is 1.1 mm, the thickness B1 at the edge portion 15a is set at "1.1 mm + 3.0 mm = 4.1 mm". In this way, it is possible to select the curvature radius R to be set for buffing from a plurality of ranges even when the post-buffing thickness A2 at the equator 31 is set thin.

In other words, the pre-buffing thickness B1 of the base tread 20 at the position corresponding to the edge portion 15a of the belt 15 is dependent on the pre-buffing thickness A1 at the equator 31. Thus whenever the thickness A1 is set incrementally thicker than the thinnest thickness, the thickness B1 is set incrementally thinner. That is, setting the thickness B1 at the edge portion 15a in inverse proportion to the thickness A1 set at the equator 31 will ensure buffing of the bonding surface of the tread in an optimum shape. It is to be noted, however, that the setting of the thickness B1 at the edge portion 15a is not limited by the above requirement, but the setting can be selected from within "upper limit of thickness A1 ± 3 mm". Also, in relation to the lower limit of the pre-buffing thickness A1 at the equator 31 of 1.1 mm, it is desirable that the pre-buffing thickness B1 at the edge portion 15a is set greater than 0 mm and within the range of A1 ±3 mm. Preferably the pre-buffing thickness B1 at the edge portion 15a of the belt 15 is set within ±10% of the thickness A1 at the equator 31, and more preferably it is set at the same thickness as the thickness A1 at the equator 31. Also, the post-buffing thickness of the base tread 20 at the edge portion 15a of the belt 15 is set within a range of 1 mm to 3 mm. The post-buffing thickness at the edge portion 15a, if set too thin, may cause the exposure of the belt, and the thickness, if set too thick, may increase the weight of the base tire, thus leading to degraded rolling performance (increased rolling resistance). Therefore, it is desirable that buffing is done to leave the thickness within the above-mentioned range of 1 mm to 3 mm. That is, the post-buffing thickness of the base tread 20 at the edge portion 15a should, in effect, be set around 2 mm.

It should be noted that depending on the post-buffing thicknesses at the equator 31 and the edge portion 15a set within the above-mentioned ranges, there may be cases where the part protruding on the base tread 20 side of the inter-belt cushion rubber layer 24 enclosing the edge portion 15a is abraded together with the base tread 20 by buffing.

The outer periphery 2a of the base tire 2 cure-molded at the above-mentioned curvature radius is such that the surface shape of the outermost rubber layer in the cross-sectional view taken along the axial direction of the post-buffing tire is formed in an arc or arcs within the range of 500 mm to 2500 mm. In other words, buffing is done to form a surface shape consisting of a single arc or a combination of a plurality of arcs of different sizes having the curvature radius R in the range of 500 mm to 2500 mm. As a result, the post-buffing thickness of 1 mm to 4 mm is left at the equator 31, and the post-buffing thickness of 1 mm to 3 mm at the edge portion 15a. The arc or arcs for buffing are so set that, in the cross-sectional shape of the base tire 2, the center thereof is set on the rotation center side of the base tire 2 on the equatorial plane and the arc or arcs of buffing extend in the axial direction of the tire.

For example, when a buffing is to be done using a single arc of a curvature radius R selected from the range of 500 mm to 2500 mm, the buffing is performed such that the apex of the arc is located at the equator 31. By buffing in this manner, the bonding area for the application of the tread can be made larger than the linear sectional shape. Also, with the surface of the base tread 20 formed into the above-described shape, the amount of buffing of the base tread 20 in the radial direction of the tire can be reduced. This will make it unnecessary to perform a buffing that involves partially larger curvature radius and will reduce the total buffing amount. That is, the occurrence of abrasion swarf (buffing dust) will be reduced, and the buffing time may be shortened, thereby raising the productivity of the base tire 2.

Also, when a buffing of the outer periphery 2a is to be done using two arcs of different curvature radii R selected from the range of 500 mm to 2500 mm, the buffing is performed on the middle portion of the outer periphery 2a corresponding to 50% to 70% of the tread width by setting the center of one of the selected arcs with a larger curvature radius R on the equatorial plane. Further, the buffing is done on the axially outer part from each end of the larger arc by setting the center of the arc of a smaller curvature radius R on the equatorial plane.

Also, when a buffing of the outer periphery 2a is to be done using a plurality of arcs of different curvature radii R selected from the range of 500 mm to 2500 mm, the buffing is performed on the middle portion of the outer periphery 2a corresponding to 50% to 70% of the tread width by setting the arc with the largest curvature radius R of the selected arcs and on the the axially outer part from each end of the largest arc by setting the arcs of incrementally smaller curvature radii R connected together. In this case, too, the arcs of different sizes may be connected together, with the centers of the respective arcs located on the equatorial plane. The arc for the middle portion is to be so set that the apex of the arc falls in line with the equator 31.

In the buffing of the outer periphery 2a, the middle portion should preferably be buffed to form an arc whose curvature radius is in excess of 900 mm. As a result, the work efficiency in the formation (buffing) of the bonding layer or in the application of the tread can be improved. At the same time, it is possible to form the bonding surface in such a manner that the bonding area between the base tread 20 and the tread rubber 3 can be made larger with reduced buffing amount (abrasion amount) in the buffing operation.

Also, by setting the pre-buffing thickness A1 of the base tread 20 as described above, the curing time in cure-molding the base tire 2 can be shortened. Also, with the buffing allowance controlled in advance, it is possible not only to reduce the buffing amount but also to shorten the buffing time.

Thus, with the difference between the pre-buffing thickness A1 at the equator 31 of the base tread 20 and the thickness B1 in the position corresponding to the edge portion 15a of the belt 15 set small, the time required for buffing can be shortened and the amount of buffing dust occurring can be reduced, thus raising the productivity of the buffing operation.

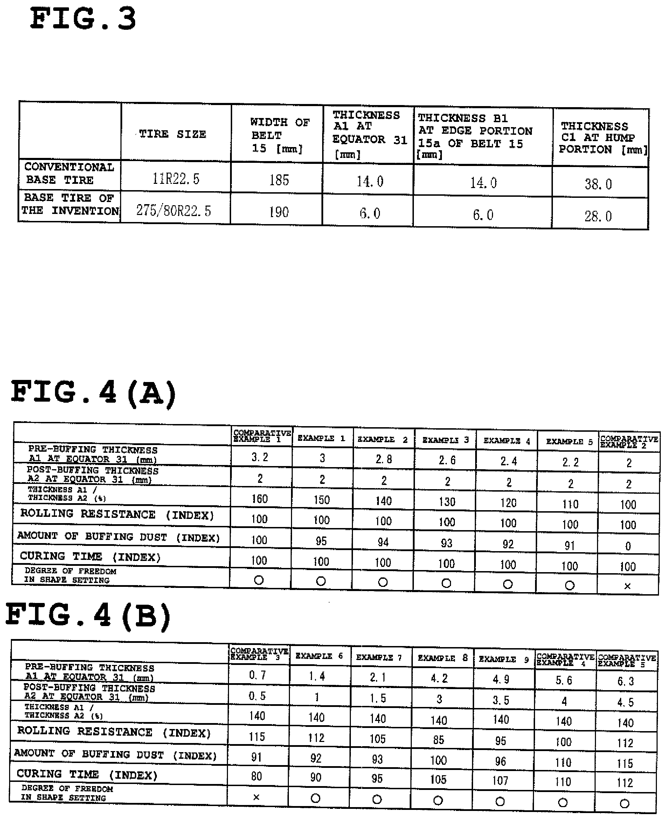

FIG. 3 is a table comparing the dimensions of the pre-buffing thickness A1 at the equator 31, thickness B1 at the edge portion 15a of the belt 15, and thickness C1 of the hump portion of the base tire of the present invention, which is formed within the above-described ranges and the conventional base tire, which is formed with the conventional dimensions, in order to verify the effects of the present invention.

As shown in FIG. 3, the conventional base tire used was a cure-molded one having the tire size of 11R22.5, the thickness A1 of the base tread 20 at the equator being 14 mm, the thickness B1 at the edge portion 15a of the belt 15 being 14 mm, and the hump thickness C1 being 38.0 mm. And the base tire of the present invention used was a cure-molded one having the tire size of 275/80R22.5, the thickness A1 of the base tread 20 at the equator being 6 mm, the thickness B1 at the edge portion 15a of the belt 15 being 6 mm, and the hump thickness C1 being 28.0 mm.

The width of the belt 15 of the conventional base tire was 185 mm, whereas the width of the belt 15 of the base tire of the invention was 190 mm. Note that both the conventional base tire and the base tire of the invention had the outer periphery 2a in the axial cross section formed in an arc of substantially the same curvature radius.

First the curing time and the buffing conditions that could be set were compared between the conventional base tire and the base tire of the invention. The buffing conditions that could be set meant here refer to the curvature radius R of the arc or arcs to be set for buffing and the thicknesses to which buffing is possible.

For the conventional base tire, of which the pre-buffing thickness A1 at the equator 31 and the thickness at the edge portion 15a are quite thick at 14 mm, the range of the curvature radius R of the arc permissible for buffing can be set wide from 500 mm to flatness. Also, the post-buffing thickness A2 at the equator 31 that can be set for buffing in the above-mentioned range of curvature radius R can be set within a range of 1.6 mm to 10 mm.

The curvature radius R for buffing at the lower limit, or 1.6 mm, of the post-buffing thickness A2 of the base tread 20 at the equator 31 is one set at the upper limit thereof which is flatness. The curvature radius R at which buffing can be performed at the upper limit, or 10.0 mm, of the post-buffing thickness A2 is larger than the pre-buffing curvature radius of the outer periphery 2a.

In other words, the curvature radius R of the arc(s) for buffing the conventional base tire can be set within a widest range of 500 mm to flatness. Moreover, the post-buffing thickness A2 of the base tread 20 can be set within a wide range of 1.6 mm to 10.0 mm. However, the pre-buffing thickness A1 at the equator 31 and the thickness B1 at the edge portion 15a are quite thick at 14 mm, so that the curing time in cure-molding tends to be long.

As the buffing conditions set for the base tire of the present invention, the thickness A1 at the equator 31 and the thickness B1 at the edge portion 15a are set at 6 mm. Accordingly, the curvature radius R of the arcs permissible for buffing is in a range of 500 mm to 2500 mm, and the post-buffing thickness A2 of the base tread 20 at the equator 31 can be set in a range of 1.0 mm to 4.0 mm.

The curvature radius R for buffing at the lower limit, or 1 mm, of the post-buffing thickness A2 of the base tread 20 at the equator 31 is the upper limit thereof, which is 2500 mm. The curvature radius R for buffing at the upper limit, or 4.0 mm, of the post-buffing thickness A2 is the lower limit thereof, which is 500 mm.

As a buffing condition set for the base tire of the present invention, the curvature radius R permissible for buffing is in the range of 500 mm to 2500 mm. Therefore, while the range is narrower than that of the conventional base tire, the post-buffing thickness A2 of the base tread 20 is in a range of 1.0 mm to 4.0 mm, thus leaving a proper thickness of the base tread 20 for the application of the tread. Also, the thickness A1 at the equator 31 and the thickness at the edge portion 15a are set at 6 mm, such that the cure-molding of the base tire of the invention can be accomplished in a shorter time than the conventional base tire.

Thus, the base tread 20 is to be formed into a shape that satisfies the dimensional relationships between the thickness A1 at the equator 31, the thickness B1 at the edge portion 15a of the belt 15, and the thickness C1 of the hump portion of the base tire of the invention. That is, the thickness A1 of the base tread 20 at the equator 31 and the thickness B1 at the edge portion 15a are to be set in the range of the above-described embodiment in the cure-molding of the base tire. Then the curing time and the buffing time for the base tire can be shortened, and moreover the occurrence of buffing dust can be reduced. As a result, the production efficiency in the manufacture of the base tire can be improved.

FIG. 4A is a table showing the rolling resistance, the amount of buffing dust, the curing time, and the degree of freedom in shape setting when the post-buffing thickness A2 at the equator 31 is fixed at 2 mm and the pre-buffing thickness A1 at the equator 31 is changed with 0.2 mm increments from 2 mm to 3.2 mm. Also, FIG. 4B is a table showing the rolling resistance, the amount of buffing dust, the curing time, and the degree of freedom in shape setting when the ratio of the pre-buffing thickness A1 to the post-buffing thickness A2 at the equator 31 is fixed at 140% and the post-buffing thickness A2 at the equator 31 is changed. Note that the characteristic is to be considered better or superior when the index value of the rolling resistance, the amount of buffing dust, or the curing time in FIGS. 4A and 4B is smaller in comparison with the reference index value of 100 of Comparative Example 1. As for the degree of freedom in shape setting, the acceptability is shown by ○ or × within the range of curvature radius of 500 mm to 2500 mm.

As shown in FIG. 4A, when the post-buffing thickness A2 at the equator 31 is fixed at 2 mm and the pre-buffing thickness A1 at the equator 31 is changed against this post-buffing thickness A2, it is evident that Examples 1 to 5, that is, the cases where the pre-buffing thickness A1 at the equator 31 is set within the range of 2.2 mm to 3mm, exhibit smaller amounts of rubber dust, while retaining the degree of freedom in shape setting, than that of Comparative Example 1 and greater reduction in the amount of rubber dust in proportion to the thinner pre-buffing thickness A1 at the equator 31. These represent the case when the pre-buffing thickness A1 at the equator 31, in relation to the post-buffing thickness A2 at the equator 31, is set within the range of 110% to 150%.

Also, as shown in FIG. 4B, when the ratio of the pre-buffing thickness A1 to the post-buffing thickness A2 at the equator 31 is fixed at 140% and the post-buffing thickness A2 at the equator 31 is changed, the results of rolling resistance, for instance, are such that Example 8 with the pre-buffing thickness A1 and the post-buffing thickness A2 set as shown exhibits the lowest rolling resistance (highest rolling performance) although the curing time is longer than that of Comparative Example 1 (FIG. 4A). More preferably, Example 9 with the pre-buffing thickness A1 and the post-buffing thickness A2 set as shown presents a reduced amount of rubber dust occurring from buffing although the curing time is slightly longer than that of Example 8.

Notably, the post-buffing thickness A2 of the base tread 20 at the equator 31 exerts influence on the rolling resistance (rolling performance). Therefore, if the thickness A2 of rubber with a low loss tangent (tan δ) gets thin, then the tread rubber to be applied on the base tread 20 must absorb the deformations during vehicular travel. Thus, the tread rubber should have a higher loss tangent (tan δ) than that of the base tread 20 because it is required to have such rubber properties as damage resistance and wear resistance when it comes in contact with the road surface.

As shown by Comparative Example 3 and Examples 6 to 8, it is clear that the thicker the post-buffing thickness A2, the higher the rolling performance will be. This means that the rolling performance will be higher (the rolling resistance will be lower) if the deformations during vehicular travel are absorbed by the base tread 20 with a lower loss tangent (tan δ) than that of the tread rubber rather than by the tread rubber which has a higher loss tangent (tan δ).

On the other hand, as is evident with Examples 8 and 9 and Comparative Examples 4 and 5, the greater the thickness A2 of the base tread 20, which peaks with Example 8, the lower the rolling resistance will be. In particular, as is evident with Comparative Examples 4 and 5, when the thickness A2 is 4 mm or greater, the rubber volume of the base tread 20 becomes too large. This will increase the amount of heat generation during vehicular travel, leading to drops in rolling performance.

Hence, it is understandable that a proper thickness is required of the post-buffing thickness A2 of the base tread 20. As is obvious with Examples 6 to 9, the thickness A2 should preferably be set in a range of 1 mm to 3.5 mm, and the most preferably the thickness A2 should be set at 3 mm or around to achieve the best rolling performance. Thus, if the post-buffing thickness A2 is set in the range of 1 mm to 3. 5 mm, the pre-buffing thickness A1 of the outermost rubber layer will be thinner than that of the conventional base tire. This will shorten the curing time when the base tire is cure-molded. Also, when the application surface of the base tire to which the tread rubber is applied is formed into a predetermined shape by buffing after the cure-molding thereof, the amount of abrasion by buffing can be reduced, thereby shortening the time required for buffing. Also, the reduction in the amount of buffing results in a drop in the amount of buffing dust occurring in buffing, thus reducing the waste of material.

In terms of the amount of buffing dust, Comparative Example 3 showed the best performance despite its diminished degree of freedom in shape setting. With Comparative Example 3, the difference between the pre-buffing thickness A1 at the equator 31 and the post-buffing thickness A2 at the equator 31 (A1 - A2) is 0.2 mm, which is the same as Example 5 in FIG. 4A. Yet, the pre-buffing thickness A1 set at the equator 31 is too thin to retain the degree of freedom in shape setting. Also, the post-buffing thickness A2 at the equator 31 is too thin, thus causing a drop in rolling performance (high rolling resistance). Hence, by setting the thicknesses A1 and A2 as with Example 6, it is possible to reduce the amount of buffing dust most and improve the rolling performance.

In terms of the curing time, Comparative Example 3 showed the best result as was the case with the amount of buffing dust. However, if the diminished degree of freedom in shape setting is to be avoided, the pre-buffing thickness A1 and the post-buffing thickness A2 should obviously be set as with Example 6.

Also, if importance is to be placed on the rolling performance which is the performance after the manufacture of the base tire and the amount of rubber dust which has a direct bearing on the reduction of material waste, the thickness A1 and the thickness A2 should be set as with Example 9.

Therefore, the pre-buffing thickness A1 at the equator should be set at "post-buffing thickness A2 × 150%" or less, and the post-buffing thickness A2 should be set at 1 mm to 3.5 mm. This can improve the rolling performance, reduce the amount of rubber dust, and shorten the curing time while retaining the degree of freedom in shape setting.

In the manufacture of a base tire, the above-described pre-buffing thickness A1 and post-buffing thickness A2 should be selected as follows from within the above-described ranges. That is, for base tires used for tires required to run at high speeds, such as those for passenger cars and trucks, the thicknesses A1 and A2 should be set as with Examples 8 and 9, with importance placed on the rolling performance and the reduced amount of rubber dust. And for base tires used for tires not required to run at high speeds, such as those for heavy-duty vehicles, the thicknesses A1 and A2 should be set as with Examples 6 and 7, with importance placed on the curing time and the reduced amount of rubber dust because of the large size of the base tires.

It is to be noted that the rolling resistance (rolling performance), the amount of buffing dust, the curing time, and the degree of freedom in shape setting in between those of Examples 7 and 8 can be easily predicted by referring to Example 2 in FIG. 4A.

It should also be noted that the structure of the belt layer is not limited to the 4-layer structure as thus far described. Also, the widths of the respective belts and the position of the widest belt in stacking the belts are also not limited to those of the above-described structure, and they can be changed according to the applications of the tire.

Also, it is not essential that the mini side rubbers 21 are provided on the base tire 2. However, provision of the mini side rubbers 21 can improve the resistance to cutting of the side region T2 which makes the closest contact with the road surface.

### Description of Reference Numerals

- 2: base tire
- 3: tread
- 13 to 16: belt
- 20: base tread
- 21: mini side rubber
- 23: under-belt cushion rubber layer
- 24: inter-belt cushion rubber layer
- A1, A2, B2, C1: thickness
- R: curvature radius

## Claims

1. A method for manufacturing a base tire (2) having a belt layer, an outermost rubber layer (20) of a predetermined width disposed over the belt layer for application of a tread thereto, and edge rubber members (21) located at both axial ends of the outermost rubber layer (20), the method comprising:
buffing the base tire (2) by setting the loss tangent (tan δ) of the outermost rubber layer (20) lower than the loss tangent (tan δ) of the edge rubber members (21), setting the pre-buffing thickness A1 at the equator (31) of the outermost rubber layer (20) in a range of "post-buffing thickness A2 × 110%" to "post-buffing thickness A2 × 150%", and setting the post-buffing thickness A2 in a range of 1 mm to 3.5 mm.

2. The method of claim 1, wherein axial end portions of the outermost rubber layer (20) in the base tire (2) are located on the inside of side surfaces of the base tire (2) in a width direction.

3. The method of claim 1 or claim 2, wherein the post-buffing surface shape of the outermost rubber layer (20) in a cross sectional view taken along the axial direction of the tire (2) has a curvature radius in a range of at least 500 mm to 2500 mm.

4. The method of any of claims 1 to 3, wherein a cushion rubber layer (24) made of a rubber softer than the outermost rubber layer (20) is provided between a widest belt (14) and the outermost rubber layer (20) at each edge (14a) of the widest belt (14) in the belt layer.

## Patentansprüche

1. Verfahren zur Herstellung eines Basisreifens (2) der eine Gürtellage aufweist, wobei eine äußerste Kautschukschicht (20) mit einer vorbestimmten Breite über der Gürtellage angebracht ist, zur Aufbringung einer Lauffläche darauf, und Kantenkautschukelemente (21) an beiden Axialenden der äußersten Kautschukschicht (20) angeordnet sind, wobei das Verfahren umfasst:
Abreiben des Basisreifens (2) durch Einstellen des Verlusttangens (tan δ) der äußersten Kautschukschicht (20) geringer als der Verlustangens (tan δ) der Kantenkautschukelemente (21), durch Einstellen der Dicke vor dem Abrieb A1 am Äquator (31) der äußersten Kautschukschicht (20) in einem Bereich "Dicke nach Abrieb A2 x 110%" bis" Dicke nach Abrieb A2 x 150%" und durch Einstellen der Dicke nach Abrieb A2 in einem Bereich von 1 mm bis 3,5 mm.

2. Verfahren nach Anspruch 1, wobei die axialen Endabschnitte der äußersten Kautschukschicht (20) im Basisreifen (2) auf der Innenseite von Seitenflächen des Basisreifens (2) in einer Breitenrichtung angeordnet sind.

3. Verfahren nach Anspruch 1 oder Anspruch 2, wobei das Oberflächenprofil nach Abrieb der äußersten Kautschukschicht (20) in einer Schnittansicht entlang der Axialrichtung des Reifens (2), einen Krümmungsradius in einem Bereich von mindestens 500 mm bis 2500 mm aufweist.

4. Verfahren nach einem der Ansprüche 1 bis 3, wobei eine Polsterkautschukschicht (24) bestehend aus einem Kautschuk, welcher weicher als die äußerste Kautschukschicht (20) ist, zwischen einem breitesten Gürtel (14) und der äußersten Kautschukschicht (20) an jeder Kante (14a) des breitesten Gürtels (14) in der Gürtellage angeordnet ist.

## Revendications

1. Procédé de fabrication d'un pneumatique de base (2) comportant une couche de ceinture, une couche de caoutchouc placée le plus à l'extérieur (20) d'une largeur prédéterminée disposée sur la couche de ceinture pour y appliquer une bande de roulement, et des éléments en caoutchouc de bord (21) situés au niveau des deux extrémités axiales de la couche de caoutchouc placée le plus à l'extérieur (20), le procédé comprenant :
Polir le pneumatique de base (2) en établissant la tangente de perte (tan δ) de la couche de caoutchouc placée le plus à l'extérieur (20) plus bas que la tangente de perte (tan δ) des éléments de caoutchouc de bord (21), établir l'épaisseur de pré-meulage A1 au niveau de l'équateur (31) de la couche de caoutchouc la plus à l'extérieur (20) dans une plage de « épaisseur de post-meulage A2 X 110% » à « épaisseur de post-meulage A2 x 150% », et établir l'épaisseur de post-meulage A2 dans une plage de 1 mm à 3,5 mm.

2. Procédé selon la revendication 1, dans lequel les parties d'extrémité axiale de la couche de caoutchouc le plus à l'extérieur (20) du pneumatique de base (2) sont situées à l'intérieur des surfaces latérales du pneumatique de base (2) dans une direction de largeur.

3. Procédé selon la revendication 1 ou la revendication 2, dans lequel la forme de la surface de post-meulage de la couche de caoutchouc le plus à l'extérieur (20) selon une vue transversale prise le long de la direction axiale du pneumatique (2) a un rayon de courbure dans une plage allant de 500 mm à 2500 mm.

4. Procédé selon l'une quelconque des revendications 1 à 3, dans lequel une couche d'amortissement en caoutchouc (24) faite d'un caoutchouc plus souple que la couche de caoutchouc le plus à l'extérieur (20) est disposée entre une ceinture la plus large (14) et la couche de caoutchouc le plus à l'extérieur (20) à chaque extrémité (14a) de la ceinture la plus large (14) dans la couche de ceinture.
